(19) Europäisches Patentamt
European Patent Office
Office européen des brevets

(11) Publication number: **0 523 242 A1**

(12) **EUROPEAN PATENT APPLICATION published in accordance with Art. 158(3) EPC**

(21) Application number: **92904232.3**

(22) Date of filing: **04.02.92**

(86) International application number: **PCT/JP92/00103**

(87) International publication number: **WO 92/13920 (20.08.92 92/22)**

(51) Int. Cl.[5]: **C08L 83/12**, C08L 83/10, C08L 83/06, C08L 101/06, C08L 63/00, C08L 67/02, C08L 71/08, C09D 183/12, C09D 183/10, C09D 183/06

(30) Priority: **04.02.91 JP 100619/91**
**04.03.91 JP 37375/91**

(43) Date of publication of application: **20.01.93 Bulletin 93/03**

(84) Designated Contracting States: **DE GB NL**

(71) Applicant: **KANSAI PAINT CO. LTD.**
**365, Kanzaki Amagasaki-shi**
**Hyogo 661(JP)**

(72) Inventor: **ISOZAKI, Osamu**
**401-68, Hirado-cho, Totsuka-ku**
**Yokohama-shi, Kanagawa 244(JP)**
Inventor: **AIDA, Haruhiko**
**13-12, Higashiyawata 4-chome**
**Hiratsuka-shi, Kanagawa 254(JP)**

(74) Representative: **Barz, Peter, Dr. et al**
**Patentanwälte Dipl.-Ing. G. Dannenberg Dr. P. Weinhold, Dr. D. Gudel Dipl.-Ing. S. Schubert, Dr. P. Barz Siegfriedstrasse 8**
**W-8000 München 40(DE)**

(54) **CURABLE RESIN COMPOSITION.**

(57) A curable resin composition comprising a glycol-modified silicon compound (I) and a resin (II) having an average of at least two hydroxyl groups in the molecule, and a method of curing the composition by applying it to a substrate followed by heating, said modified silicon compound (I) being produced by the reaction of a silicon compound represented by general formula (1) with a glycol component, wherein $R_1$ represents a monovalent $C_1$ to $C_{20}$ hydrocarbyl, -R'OR'', -R'$O_2$CR'', or an organic group having at least one epoxy group; $R_2$ groups may be the same or different from each other and each represents hydroxyl or a hydrolyzable group; R' represents a divalent $C_7$ to $C_8$ hydrocarbyl; and R'' represents a monovalent $C_1$ to $C_{10}$ hydrocarbyl, and having repeating units represented by general formula (2), wherein $R_1$ and $R_2$ are as defined above and A represents a glycol residue.

EP 0 523 242 A1

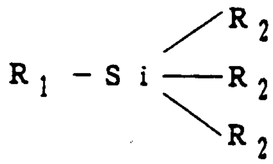 (1)

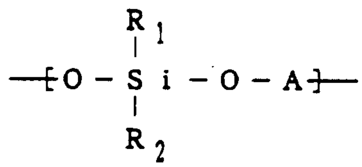 (2)

## TECHNICAL FIELD

The present invention relates to curable resin compositions.

## BACKGROUND ART

Various curable resin compositions have heretofore been proposed which contain an alkoxysilane group and hydroxyl group as functional groups, whereas none of these compositions are satisfactory to use. For example, already known is a mixture of a hydroxyl-containing resin and a copolymer comprising a $\gamma$-methacryloxypropyltrialkoxysilane as a component monomer. However, since the three alkoxysilane groups derived from the monomer are exceedingly reactive with hydroxyl groups, the mixture has the drawback of exhibiting poor storage stability, being likely to become viscous and gel even in the presence of a small amount of water (such as moisture in air or water contained in the material) and being difficult to handle. Also known is a mixture of a hydroxyl-containing resin and a polysiloxane oligomer having a silanol group at opposite ends of a dialkyl- or diphenyl-polysiloxane, but the mixture has the drawback of being low in curability because the reaction of the silanol group with hydroxyl is inhibited by the adjacent dialkyl or diphenyl group.

## DISCLOSURE OF THE INVENTION

An object of the present invention is to provide a novel curable resin composition which is free of the foregoing drawbacks.

Another object of the invention is to provide a resin composition which has high storage stability, is free of the likelihood of becoming viscous or gelling even in the presence of a small amount of water, and exhibits excellent curability.

These and other objects of the invention will become apparent from the following description.

The present invention provides a curable resin composition comprising a glycol-modified silicon compound (I) and a resin (II) having at least two hydroxyl groups in the molecule on the average and admixed with the silicon compound (I), the silicon compound (I) being obtained by reacting a glycol with a silicon compound represented by the formula

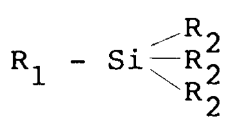

(1)

wherein $R_1$ is a monovalent $C_{1-20}$ hydrocarbon group, -R'-O-R'' group, -R'-OOC-R'' group or organic group having at least one epoxy group, and the groups $R_2$ are the same or different and are each a hydroxyl group or hydrolyzable group, R' being a bivalent $C_{1-8}$ hydrocarbon group, R'' being a monovalent $C_{1-10}$ hydrocarbon group, the silicon compound (I) having a structural unit represented by the formula

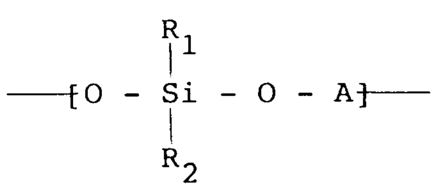

(2)

wherein $R_1$ and $R_2$ are as defined above, and A is a residue of the glycol. The invention further provides a method of curing the resin composition comprising applying the composition to a substrate and heating the resulting coating for curing.

We have carried out intensive research to overcome the drawbacks of the conventional curable resin compositions described and found that the above objects can be fulfilled by a resin composition comprising a mixture of a hydroxyl-containing resin and a glycol-modified silicon compound which is obtained by reacting the above-specified silicon compound with a glycol and which has the structure specified above. The present invention has been accomplished based on this novel finding.

The silicon compound to be used as a material for preparing the glycol-modified silicon compound (I) for use in the composition of the invention is a compound represented by the formula

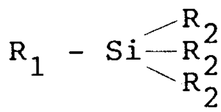 (1)

wherein $R_1$ is a monovalent $C_{1-20}$ hydrocarbon group, -R'-O-R'' group, -R'-OOC-R'' group or organic group having at least one epoxy group, and the groups $R_2$ are the same or different and are each a hydroxyl group or hydrolyzable group, R' being a bivalent $C_{1-8}$ hydrocarbon group, R''" being a monovalent $C_{1-10}$ hydrocarbon group.

With reference to the formula (1), examples of monovalent $C_{1-20}$ hydrocarbon groups represented by $R_1$ are alkyl, cycloalkyl, aryl, aralkyl and like groups. The "alkyl group may be of the straight-chain or branched-chain type. Examples of such alkyl groups are methyl, ethyl, n-propyl, isopropyl, n-butyl, isobutyl, sec-butyl, tert-butyl, n-pentyl, isopentyl, tert-pentyl, neopentyl, n-hexyl, isohexyl, 1-methylpentyl, 2-methylpentyl, n-heptyl, 5-methylhexyl, n-octyl, n-nonyl, n-decyl, dodecyl, tridecyl, tetradecyl, hexadecyl, octadecyl and the like. On the other hand, the "cycloalkyl group" can be generally one having 3 to 7 carbon atoms. Examples of such groups include cyclopropyl, cyclobutyl, cyclopentyl, cyclohexyl and the like, among which cyclohexyl is especially preferable.

Further the "aryl group" may be of the monocyclic or polycyclic type. Such groups include, for example, phenyl, toluyl, xylyl, naphthyl and the like. Further the "aralkyl group" is an alkyl group substituted with such an aryl group, examples being benzyl, phenethyl, etc.

With reference to the formula (1), R' in the group -R'-O-R'' or -R'-OOC-R'' represented by $R_1$ is a bivalent $C_{1-8}$ hydrocarbon group, which is preferably a straight-chain or branched-chain "alkylene group." Examples of such groups are methylene, ethylene, propylene, butylene, pentylene, octylene and the like. Further R'' is a monovalent $C_{1-10}$ hydrocarbon group. Such groups are included in the above-mentioned monovalent $C_{1-20}$ hydrocarbon groups and are preferably "aryl groups."

In the case where $R_1$ in the formula (1) is an organic group having at least one epoxy group, the resin composition obtained has improved curability. Exemplary of the organic group having epoxy is a monovalent organic group comprising a hydrocarbon group or oxygen-substituted hydrocarbon group, and an aliphatic or alcyclic epoxy group attached to the hydrocarbon group. The first-mentioned hydrocarbon group is a bivalent $C_{1-10}$ hydrocarbon group, which is preferably a straight-chain or branched-chain alkylene group such as methylene, ethylene, propylene, butylene, pentylene or octylene. The oxygen-substituted hydrocarbon group is such a bivalent $C_{1-10}$ hydrocarbon group which is partially substituted with oxygen, such as $-R_3-O-R_3$ group or $-COO-R_3-$ group wherein the groups $R_3$ are the same or different and are each a bivalent $C_{1-10}$ hydrocarbon group.

Examples of useful aliphatic or alicyclic epoxy groups are

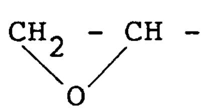 , 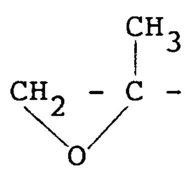 , 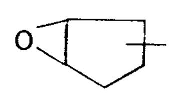 ,

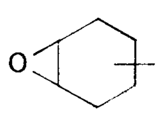 , 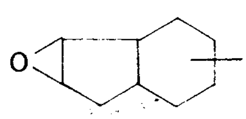 , 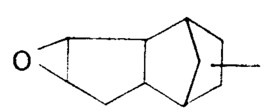

and the like.

The organic group having epoxy and represented by $R_1$ in the formula (1) is preferably an organic group represented by

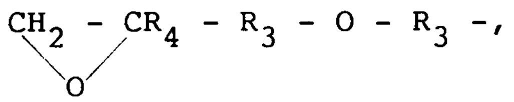

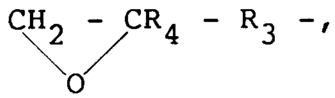

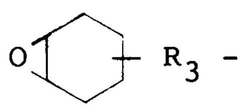 or 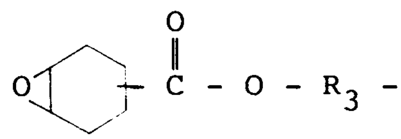

wherein $R_4$ is a hydrogen atom or methyl group, and $R_3$ had the same meaning as above.

The hydrolyzable group represented by $R_2$ in the formula (1) is a group which produces a hydroxysilane group when hydrolyzed. Examples of such groups are $C_{1-6}$ alkoxyl groups; phenoxy, tolyloxy, p-methoxyphenoxy, p-nitrophenoxy, benzyloxy and like aryloxy groups; acetoxy, propionyloxy, butanoyloxy, benzoyloxy, phenylacetoxy, formyloxy and like acyloxy groups; and groups represented by the formula

$$-O-(C_nH_{2n}-O)_m-R_5$$

wherein $R_5$ is a $C_{1-8}$ alkyl group, cycloalkyl group, aryl group or aralkyl group, n is an integer of 1 to 3, and m is an integer of 1 to 4.

The "$C_{1-6}$ alkoxyl groups" may be of the straight-chain or branched-chain type and are, for example, methoxy, ethoxy, n-propoxy, isopropoxy, n-butyloxy, isobutyloxy, sec-butyloxy, tert-butyloxy, n-pentyloxy, isopentyloxy, tert-pentyloxy, neopentyloxy, n-hexyloxy, isohexyloxy, 1-methylpentyloxy, 2-methylpentyloxy and the like.

On the other hand, the "$C_{1-8}$ alkyl group", "cycloalkyl group", "aryl group" and "aralkyl group" mentioned above are included in the foregoing examples of monovalent $C_{1-20}$ hydrocarbon groups.

To obtain a resin composition having excellent curability, it is especially desirable that $R_2$ in the formula (1) be a $C_{1-3}$ alkoxyl group such as methoxy, ethoxy, n-propoxy or the like.

Among the silicon compounds represented by the formula(1), those wherein $R_1$ is a monovalent $C_{1-20}$ hydrocarbon group, -R'-O-R'' group or -R'-OOC-R'' group and which are preferable are, for example, methyltrimethoxysilane, methyltriethoxysilane, methyltripropoxysilane, methyldimethoxyethoxysilane, butyltrimethoxysilane, butyltriethoxysilane, butyltripropoxysilane, phenyltrimethoxysilane, phenyltriethoxysilane, phenyltripropoxysilane, phenethyltrimethoxysilane, phenethyltriethoxysilane, phenethyltripropoxysilane, phenyl ether ethyltrimethoxysilane, phenyl ether ethyltriethoxysilane, phenyl ether ethyltripropoxysilane, phenyl ether propyltrimethoxysilane, phenyl ether propyltriethoxysilane, phenyl ether propyltripropoxysilane, phenyl ether butyltrimethoxysilane, phenyl ester ethyltrimethoxysilane, phenyl ester ethyltriethoxysilane, phenyl ester ethyltripropoxysilane, phenyl ester propyltrimethoxysilane, phenyl ester propyltriethoxysilane, phenyl ester propyltripropoxysilane, phenyl ester butyltrimethoxysilane and the like.

Among the silicon compounds represented by the formula (1), those wherein $R_1$ is an organic group having at least one epoxy group and which are preferable are, for example, $\gamma$-glycidoxypropyltrimethoxysilane, $\gamma$-glycidoxypropyltriethoxysilane, $\gamma$-methylglycidoxypropyltrimethoxysilane, $\delta$-glycidoxybutyltriethoxysilane and like aliphatic epoxy-containing silane compounds, and $\beta$-(3,4-epoxycyclohexyl)-ethyltrimethoxysilane and like alicyclic epoxy-containing silane compounds.

The glycol for use in the glycol-modified silicon compound (I) is not limited specifically insofar as the glycol has at least two hydroxyl groups in the molecule. Examples of preferred glycols are diols, polyether diols, dihydroxy acids, polyester diols, polybutadiene diols, etc.

The diol is a compound represented by the formula $C_pH_{2p}(OH)_2$ wherein p is an integer of 1 to 20. The compound may be of the straight-chain or branched-chain type. Examples of useful diols are ethylene glycol, propylene glycol, 1,4-butylene glycol, 1,3-butylene glycol, 2,3-butylene glycol, 1,5-pentanediol, 2,4-pentanediol, 1,6-hexanediol, 2,5-hexanediol, 1,7-heptanediol, 2,4-heptanediol, 2-ethyl-1,3-hexanediol, 1,10-decanediol, 1,12-dodecanediol, 1,14-tetradecanediol, 1,16-hexadecanediol, 1,18-octadecanediol and the like.

The polyether diol is a compound represented by the formula

$$H\text{-}[O\text{-}C_qH_{2q}]_r\text{-}OH$$

wherein q is an interger of 2 to 4 and r is an integer of 2 to 50. Examples of such compounds are polyethylene glycol, polypropylene glycol, polyethylene polypropylene glycol, polytetramethylene ether glycol and the like.

Examples of useful dihydroxy acids are dimethylolpropionic acid and the like. Examples of useful polyester diols are condensation-type polyester diols obtained by subjecting a dibasic acid (such as adipic acid, azelaic acid, sebacic acid, dodecanedioic or phthalic acid) and one of the above glycols to a condensation reaction so that two hydroxyl groups remain in the molecule of the resulting product, lactonetype polyester diols obtained by subjecting a lactone (such as $\epsilon$-caprolactone) to ring-opening polymerization, polycarbonate diols, etc.

According to the present invention, a polyol having at least three hydroxyl groups is usable in addition to the glycol mentioned when suitable for giving the properties required of the composition. Examples of useful polyols are triol compounds such as trimethylolethane, trimethylolpropane, glycerin and tris(2-hydroxyethyl)isocyanurate; polyether triols prepared by reacting 1 mole of such a triol compound with 1 to 3 moles of an alkylene oxide (such as ethylene oxide, propylene oxide or butylene oxide); triols such as polyester triols prepared by the reaction of 1 mole of such a triol compound, 1 to 3 moles of the above-mentioned dibasic acid and 1 to 3 moles of a diol represented by the formula $C_pH_{2p}(OH)_2$, and tetraol compounds such as pentaerythritol; polyether tetraols prepared by reacting 1 mole of such a tetraol compound with 1 to 4 moles of an alkylene oxide; and polyester triols prepared by reacting 1 mole of a tetraol compound with 1 to 4 moles of the dibasic acid and 1 to 4 moles of the diol of the formula $C_pH_{2p}$-$(OH)_2$.

The polyol having at least three hydroxyl groups can be used in an amount of up to about 50 wt. %, preferably about 0 to about 30 wt. %, based on the combined amount of the polyol and the glycol.

The glycol and the polyol are preferably about 62 to about 3000, more preferably about 62 to about 500, in molecular weight.

The reaction of the silicon compound, the glycol and the polyol which has at least three hydroxyl groups and which is used when required can be conducted by heating a mixture of these components preferably in the presence of a catalyst, followed by a dehydration or alcohol removing reaction. When the glycol used is one having carboxyl, the carboxyl is serviceable as an internal catalyst.

The glycol and the tri- or poly-ol which is used as required are used in a combined amount of about 1 to about 0.5 mole, preferably about 0.98 to about 0.7 mole, per mole of the silicon compound to prepare the mixture.

If the amount of the glycol and the tri- or poly-ol is more than about 1 mole, the composition obtained has low curability, whereas if the amount is conversely less than about 0.5 mole, a large amount of free alkoxysilane will remain in the composition, which is then likely to exhibit impaired storage stability. Thus, amounts outside the specified range are not desirable.

The catalysts useful for the reaction of the silicon compound, glycol and tri- or poly-ol include, for example, metal alkoxides, metal chelate compounds and acid compounds. More specific examples of useful metal alkoxides are aluminum trimethoxide, aluminum triethoxide, aluminum tripropoxide, aluminum tributoxide and like aluminum alkoxides; titanium tetramethoxide, titanium tetraethoxide, titanium tetrapropoxide, titanium tetrabutoxide and like titanium alkoxides; zirconium tetramethoxide, zirconium tetraethoxide, zirconium tetrapropoxide, zirconium tetrabutoxide and like zirconium alkoxides; etc. Examples of suitable metal chelate compounds are reaction products of these metal alkoxides with chelating agents including $\beta$-diketones (such as acetylacetone), acetoacetic acid esters (such as methyl acetoacetate), malonic acid esters (such as ethyl malonate), ketones having a hydroxyl group at the $\beta$-position (such as diacetone alcohol), aldehydes having a hydroxyl group at the $\beta$-position (such as salicylaldehyde) and esters having a hydroxyl group at the $\beta$-position (such as methyl salicylate). Examples of preferred acid compounds are methanesulfonic acid, ethanesulfonic acid, benzenesulfonic acid, p-toluenesulfonic acid and like organic protonic acids; phosphoric acid, phosphonic acid, sulfuric acid, hydrochloric acid and like inorganic protonic acids; etc.

The catalyst is used preferably in an amount of about 0.001 to about 10 parts by weight, more preferably about 0.05 to about 1 part by weight, per 100 parts by weight of combined amount of the silicon compound, glycol and tri- or poly-ol.

For the above reaction, the mixture can be heated usually at a temperature of about 80 to about 250 °C for about 1 to about 10 hours.

The glycol-modified silicon compound (I) thus obtained consists essentially of a structural unit

represented by the formula

$$-\!\!-\!\!\left[ O - \underset{R_2}{\overset{R_1}{\underset{|}{\overset{|}{Si}}}} - O - A \right]\!\!-\!\!- \qquad (2)$$

wherein $R_1$, $R_2$ and A have the same meaning as above.

In the above formula (2), A is a residue of the glycol. It is a hydroxyl-free bivalent glycol residue resulting from the bonding of two hydroxyl groups of the glycol to the silicon compound used as a starting material. Typically, the residue is, for example, $-C_pH_{2p}-$ group when a diol is used an the glycol, or

$$-C_qH_{2q}-\!\!\!-\!\!\left[ O-C_qH_{2q} \right]_{r-1}$$

group when a polyether diol is used.

Further in the case where the polyol, other than the glycol, having at least three hydroxyl groups is used, the glycol-modified silicon compound (I) further has a structural unit resulting from the reaction of the silicon compound and the tri- or poly-ol and represented by the formula

$$-\!\!-\!\!\left[ O - \underset{R_2}{\overset{R_1}{\underset{|}{\overset{|}{Si}}}} - O - \underset{|}{B} \right]\!\!-\!\!- \qquad (3)$$

wherein $R_1$ and $R_2$ have the same meaning as above, and B is a residue of the tri- or poly-ol.

The structural units of these formulae (2) and (3) may be present as blocked or random repeating units.

According to the invention, a hydroxyl and/or hydrolyzable group as directly attached to the silicon atom derived from the silicon compound starting material, or a hydroxyl group or the like derived from the glycol or tri- or poly-ol can be present at the molecular end of the glycol-modified silicon compound (I).

The glycol-modified silicon compound (I) contains preferably about 50 to 100 wt.%, more preferably about 80 to about 99 wt.%, of structural units of the formula (2). Further the compound (I) contains preferably about 2 to about 50, more preferably about 5 to about 30, $-SiR_2$ groups in the molecule on the average. If the number of $-SiR_2$ groups is less than about 2 on the average, lower curability will result, whereas if it is more than about 50 on the average, impaired storage stability tends to result. Thus, numbers outside the above range are undesirable.

In the case where $R_1$ in the glycol-modified silicon compound (I) is an organic group having at least one epoxy group, the number of epoxy groups present in the compound (I) is preferably about 0.1 to about 50, more preferably 0.5 to 30, per molecule on the average from the viewpoint of improving the curability and preventing impairment of the storage stability.

The glycol-modified silicon compound (I) can be about 500 to about 50000, preferably about 1000 to about 5000, in molecular weight. If the molecular weight is less than about 500, the composition as cured will not exhibit satisfactory properties, whereas if it is greater than about 50000, the compound will be lower in solubility in organic solvents, so that molecular weights outside the above range are not desirable.

The resin (II) for use in the present composition is not limited specifically but can be a suitable one of those conventionally used insofar as the resin has at least two hydroxyl groups in the molecule on the average. Examples of useful resins are polymers comprising a hydroxyl-containing polymerizable unsaturated monomer (e.g., hydroxy(cyclo)alkyl (meth)acrylate, hydroxy(cyclo)alkyl vinyl ether, vinyl alcohol, alkylene glycol mono(meth)acrylate or adduct of such a monomer with a lactone) and, when required, other polymerizable unsaturated monomer (e.g . (cyclo)alkyl (meth)acrylate, vinyl aromatic compound, (meth)-acrylonitrile, vinyl ether, allyl ether, vinyl ester, propenyl ester, olefin compound or (meth)acrylic acid); fluorine-containing polymers comprising such a hydroxyl-containing polymerizable unsaturated monomer, fluorine-containing polymerizable unsaturated monomer (e.g., fluoroolefin, perfluoroalkyl-containing vinyl

monomer or perfluoroalkenyl-containing vinyl monomer) and, when required, other polymerizable unsaturated monomer (such as one given above); polyester resins prepared from a polybasic acid (e.g., the dibasic acid previously mentioned, trimellitic acid (or anhydride), pyromellitic acid or like tri- or tetra-basic acid), polyhydric alcohol (e.g., the diol mentioned or tri- or poly-ol) and, when required, monobasic acid (e.g., fatty acid, benzoic acid or derivative thereof); resins prepared by partially or wholly hydrolyzing a polymer comprising vinyl acetate as a component monomer, and other modified resins (e.g., epoxy-modified resin obtained by reacting a carboxyl-containing resin with an epoxy resin, urethane resin obtained by reacting a hydroxyl-containing resin with a polyisocyanate compound, and the like); etc.

The resin (II) can be usually about 500 to about 100000, preferably about 1000 to about 50000, in molecular weight. If the molecular weight is smaller than about 500, the composition as cured will exhibit impaired properties, whereas if it is greater than about 100000, the resin is lower in solubility in organic solvents. Molecular weights outside the above range are therefore undesirable.

The curable resin composition of the present invention can be obtained by mixing the compound (I) and the resin (II) together. The proportions of the two components to be mixed together are 1 to 99 wt. %, preferably 10 to 90 wt. %, of the compound (I) and 1 to 99 wt. %, preferably 10 to 90 wt. %, of the resin (II), based on the combined amount (calculated as solids) of the compound (I) and the resin (II). Proportions of the compound (I) and resin (II) outside the above ranges are not very desirable since it is then difficult to obtain a composition which is excellent in storage stability and in the properties of cured coatings prepared therefrom.

Carboxyl groups can be incorporated into the compound (I) and/or the resin (II) for preparing the present resin composition. The carboxyl group has the advantage of ensuring excellent curability at low temperatures.

Furthermore, curing catalysts, such as the aforementioned metal alkoxides, metal chelate compounds and acid compounds, can be admixed with the resin composition of the invention. This results in improved curability at low temperatures. It is suitable to use the curing catalyst in an amount of about 0.001 to about 10 parts by weight per 100 parts by weight of the combined amount (solids) of the compound (I) and resin (II).

When required, organic solvents, inorganic pigments, organic pigments, dyes, fluidity adjusting agents, ultraviolet absorbers and photostabilizers can further be incorporated into the curable resin composition of the invention.

The present curable resin composition is usable as a resin component of coating compositions, adhesive compositions, printing inks, etc.

The resin composition of the invention can be cured favorably by dissolving or dispersing the resin composition usually in an organic solvent, applying the solution or dispersion to a substrate and thereafter drying the coating. The organic solvent is not limited specifically insofar as the compound (I) and the resin (II) can be dissolved or dispersed therein with good stability. Examples of useful solvents are aromatic organic solvents (such as xylene and toluene), ketone organic solvents (such as acetone, methyl ethyl ketone and methyl isobutyl ketone), ester organic solvents (such as ethyl acetate and butyl acetate), ether organic solvents (such as hexyl ether), cellosolve organic solvents (such as ethyl cellosolve, butyl cellosolve and propylene glycol monomethyl ether), carbitol organic solvents (such as methyl carbitol and butyl carbitol), glyme organic solvents (such as ethylene glycol dimethyl ether), diglyme organic solvents (such as diethylene glycol dimethyl ether), cellosolve acetate organic solvents (such as ethylene glycol monoacetate and methyl cellosolve acetate), alcohol organic solvents (such as ethanol, propanol and butanol), aliphatic or alicyclic hydrocarbon organic solvents (such as hexane and heptane), etc.

Examples of useful substrates are those of aluminum, iron, copper, tin, stainless steel, zinc and alloys of such metals, substrates plated with such metals, these metal substrates as surface-treated by a chemical conversion process, substrates of plastics, glasses, woods and concrete, and substrates having a coating.

Useful means for or methods of applying the composition to substrates include, for example, sprays, brushes, dipping, flow coating, rolls, etc. The coating of the composition to be formed is usually about 1 $\mu$m to about 100 $\mu$m, preferably about 5 $\mu$m to about 80 $\mu$m, in dry thickness. For curing, the composition is heated usually at a temperature of about 120 to about 180 °C for about 30 to about 60 minutes. When the curable resin composition contains carboxyl groups as incorporated in the compound (I) and/or resin (II), or a curing catalyst as admixed therewith, the composition is heated at a temperature of about 80 to about 180 °C for about 10 to about 60 minutes.

With the curable resin composition of the present invention, the functional group derived from the structural unit of the formula (2) (hydroxyl group, hydrolyzable group, epoxy group or the like) in no way reacts with hydroxyl around room temperature, but this reaction rapidly proceeds when the composition is heated. Presumably, this enables the resin composition to exhibit excellent storage stability and high

curability in good balance.

BEST MODE OF CARRYING OUT THE INVENTION

The present invention will be further described with reference to preparation examples, examples and comparative examples, wherein the parts and percentages are by weight.

Preparation examples, examples and comparative examples in the case where $R_1$ in silicon compounds of formula (I) is monovalent $C_{1-20}$ hydrocarbon group, -R'-0-R" group or -R'-OOC-R" group

Preparation Example 1

Preparation of silicon compound (i)

A mixture of 1 mole of phenyltrimethoxysilane, 0.95 mole of diethylene glycol and 1000 ppm of titanium isopropoxide was heated from 80 ° C to 150 ° C over a period of 3 hours for a methanol removing reaction to obtain a silicon compound (i). The silicon compound (i) obtained had a molecular weight (peak molecular weight as determined by gel permeation chromatography; the term will be used hereinafter in the same meaning) of 3800, a Gardner viscosity of W, a unit structure represented by the formula

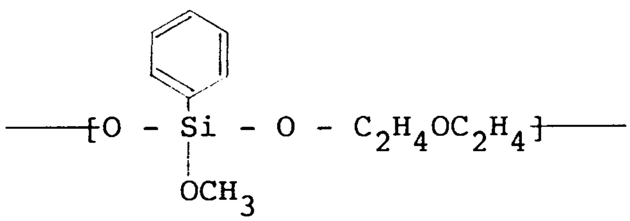

and about 15 methoxysilane groups in the molecule on the average.

Preparation Example 2

Preparation of silicon compound (ii)

A mixture of 1 mole of methyltriethoxysilane, 0.93 mole of ethylene glycol and 1000 ppm of aluminum trisacetylacetonato was heated from 80 ° C to 150 ° C over a period of 3 hours for an ethanol removing reaction to obrain a silicon compound (ii). The silicon compound (ii) obtained had a molecular weight of 2000, a Gardner viscosity of ST, a unit structure represented by the formula

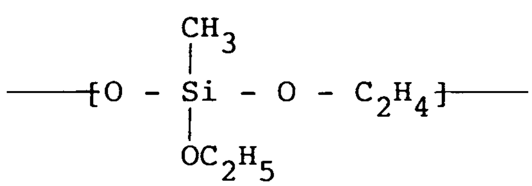

and about 13 ethoxysilane groups in the molecule on the average.

Preparation Example 3

Preparation of silicon compound (iii)

A mixture of 1 mole of phenethyltrimethoxysilane, 0.97 mole of polyester diol (condensation product, 1/2 in phthalic acid/ethylene glycol mole ratio) and 1000 ppm of titanium isopropoxide was heated from 80 ° C to 150 ° C over a period of 3 hours for a methanol removing reaction to obtain a silicon compound (iii). The silicon compound (iii) obtained had a molecular weight of 12000, a Gardner viscosity of P, a unit structure represented by the formula

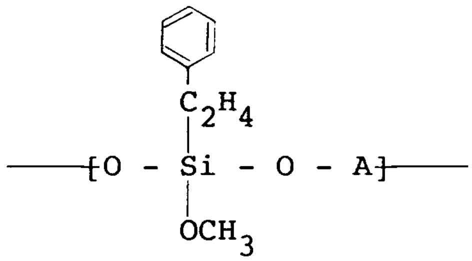

wherein A is a residue of the polyester diol, and about 28 methoxysilane groups in the molecule on the average.

Preparation Example 4

Preparation of silicon compound (iv)

One mole of phenyltrimethoxysilane and 0.94 mole of dimethylolpropionic acid were heated from 80 °C to 150 °C over a period of 3 hours for a methanol removing reaction to obtain a silicon compound (iv). The silicon compound (iv) obtained had a molecular weight of 5000, a Gardner viscosity of $Z_3$, a unit structure represented by the formula

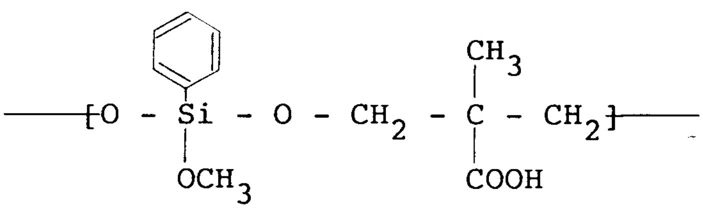

and about 18 methoxysilane groups in the molecule on the average.

Preparation Example 5

Preparation of silicon compound (v)

A mixture of 1 mole of phenethyltriethoxysilane, 0.5 mole of methyltriethoxysilane, 0.5 mole of trimethylolpropane, 0.5 mole of polyester diol (the same as the one used for silicon compound (iii)) and 500 ppm of aluminum trisacethylacetonato was heated from 80 °C to 200 °C over a period of 3 hours for an ethanol removing reaction to obtain a silicon compound (v). The silicon compound (v) obtained had a molecular weight of 5000, a Gardner viscosity of $Z_2$, unit structures individually represented by the formula

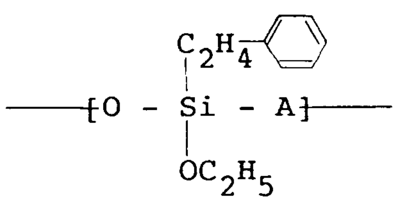

and the formula

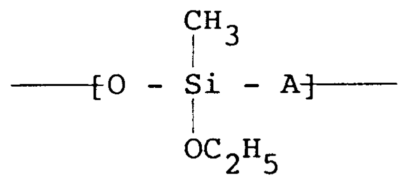

wherein A is a residue of the polyester diol, and about 10 ethoxysilane groups in the molucule on the average.

Preparation Example 6

Preparation of silicon compound (vi)

A mixture of 1 mole of a compound represented by the formula

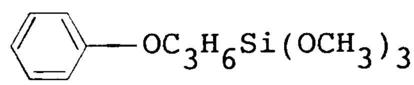

0.94 mole of diethylene glycol and 1000 ppm of titanium isopropoxide was heated from 80°C to 150°C over a period of 3 hours for a methanol removing reaction to obtain a silicon compound (vi). The silicon compound (vi) obtained had a molecular weight of 3800, a Gardner viscosity of V, a unit structure represented by the formula

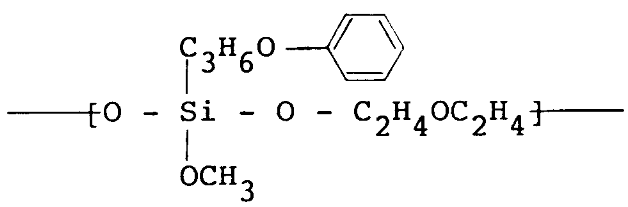

and about 15 methoxysilane groups in the molecule on the average.

Preparation Example 7

Preparation of silicon compound (vii)

A mixture of 1 mole of a compound represented by the formula

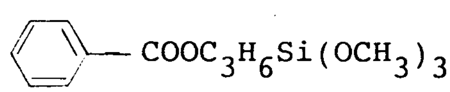

0.94 mole of diethylene glycol and 1000 ppm of titanium isopropoxide was heated from 80°C to 150°C over a period of 3 hours for a methanol removing reaction to obtain a silicon compound (vii). The silicon compound (vii) obtained had a molecular weight of 3800, a Gardner viscosity of W, a unit structure represented by the formula

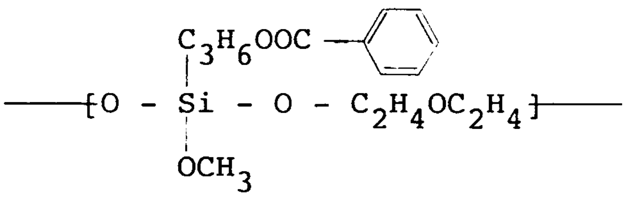

and about 15 methoxysilane groups in the molecule on the average.

Preparation Example 8

Preparation of solution of hydroxyl-containing resin (i)

Into a reactor was placed 100 parts of xylene, which was then maintained at 80°C. To the xylene was added dropwise over a period of 3 hours a mixture of 50 parts of methyl methacrylate, 13 parts of 2-hydroxyethyl methacrylate, 34 parts of n-butyl acrylate, 3 parts of acrylic acid and 2 parts of azobisdimethylvaleronitrile to obtain a solution of resin (i) having a Gardner viscosity of P (50% in solids content). The resin was 20000 in molecular weight and had about 20 hydroxyl groups in the molecule on the average.

Preparation Example 9

Preparation of solution of hydroxyl-containing resin (ii)

Into a reactor were placed 20 parts of trimethylolpropane, 30 parts of neopentyl glycol and 50 parts of phthalic anhydride, which were then subjected to esterification reaction at 200 to 250°C, followed by addition of xylene to obtain a solution of resin (ii) having a solids content of 50%. The resin (ii) per se was 4000 in molecular weight, and the solution (50% in solids content) was T in Gardner viscosity.

Examples 1-11

Compositions of Examples 1 to 11 were prepared using the components given in Table 1 in the proportions listed therein. The compositions were checked for storage stability, gel fraction ratio (curability), adhesion and acid resistance. Table 1 shows the results.

Table 1

| | | | Example | | | | | | |
|---|---|---|---|---|---|---|---|---|---|
| | | | 1 | 2 | 3 | 4 | 5 | 6 | 7 |
| Compo-nents (parts) | Silicon Compound | Kind | (i) | (ii) | (iii) | (iv) | (v) | (i) | (i) |
| | | Amount | 100 | 100 | 100 | 100 | 100 | 100 | 100 |
| | Hydroxyl-containing resin | Kind | (i) | (i) | (i) | (i) | (i) | (ii) | (iii) |
| | | Amount | 100 | 100 | 100 | 100 | 100 | 50 | 300 |
| | Catalyst | Kind | | | | | | (i) | (ii) |
| | | Amount | | | | | | 2 | 5 |
| Prop-erties | Storage stability | | A | A | A | A | A | A | A |
| | Baking condition | | 140°C 30min | 140°C 30min | 140°C 30min | 140°C 30min | 140°C 30min | 100°C 60min | 140°C 30min |
| | Gel fraction ratio | | 98.2 | 96.1 | 93.1 | 98.0 | 93.0 | 96.0 | 92.2 |
| | Coating appearance | | Good | Good | Good | Good | Good | Good | Good |
| | Adhesion | | 100 | 100 | 100 | 100 | 100 | 100 | 100 |
| | Acid resistance | | Good | Good | Good | Good | Good | Good | Good |

Table 1 (continued)

| | | | Example | | | | Comp. Ex. | |
|---|---|---|---|---|---|---|---|---|
| | | | 8 | 9 | 10 | 11 | 1 | 2 |
| Components (parts) | Silicon Compound | Kind | (v) | (v) | (vi) | (vii) | | |
| | | Amount | 100 | 100 | 100 | 100 | | |
| | Hydroxyl-containing resin | Kind | (ii) | (iii) | (i) | (i) | | |
| | | Amount | 50 | 300 | 100 | 100 | | |
| | Catalyst | Kind | (i) | (ii) | | | | |
| | | Amount | 1 | 2 | | | | |
| Properties | Storage stability | | A | A | A | A | D | A |
| | Baking condition | | 180°C 10min | 80°C 30min | 140°C 30min | 140°C 30min | 140°C 30min | 140°C 30min |
| | Gel fraction ratio | | 99.0 | 93.0 | 97.9 | 98.3 | 96.6 | 65.2 |
| | Coating appearance | | Good | Good | Good | Good | Shrinkage | Good |
| | Adhesion | | 100 | 100 | 100 | 100 | 95 | 90 |
| | Acid resistance | | Good | Good | Good | Good | Lower Gloss | Blisters |

Comparative Example 1

Into a reactor was placed 100 parts of xylene, which was then maintained at 80°C. A mixture of 40 parts of $\gamma$-methacryloxypropyltrimethoxysilane, 50 parts of n-butyl methacrylate, 10 parts of acrylic acid and

azobisdimethylvaleronitrile was added dropwise to the xylene over a period of 3 hours to obtain a resin solution having a Gardner viscosity of H (50% in solids content). The resin was 2000 in molecular weight. The solution (100 parts) of hydroxyl-containing resin (i) was then admixed with 200 parts of this resin solution to obtain a composition of Comparative Example 1. Table 1 shows the properties of the composition.

Comparative Example 2

Fifty parts of the solution of hydroxyl-containing resin (i) was admixed with 50 parts of dimethylpolysiloxane (400 in molecular weight) having a silanol group at opposite ends to obtain a composition of Comparative Example 2. Table 1 shows the properties of the composition.

With reference to Table 1, the solution of hydroxyl-containing resin (iii) is 50% xylene solution of Lumiflon LF-9118 (fluorine-containing resin produced by Asahi Glass Co., Ltd., 15000 in molecular weight and 130 in hydroxy value), the catalyst (i) is aluminum trisacetylacetonato, and the catalyst (ii) is p-toluenesulfonic acid.

The compositions were tested for storage stability, gel fraction ratio and other properties listed in Table 1 under the following conditions.

Storage stability

A sample of composition was allowed to stand at 20°C for 7 days in a container with its closure removed and then compared with the composition in the initial state to check the resulting change in viscosity according to the following criteria.

A: slightly increased viscosity
B: increased viscosity
C: markedly increased viscosity
D: gelation

Gel fraction ratio

Each of the compositions of Examples and Comparative Examples was applied to tinplate to a thickness of 30 μm when dried and heated under the baking condition given in Table 1 to obtain a cured coating. The cured coating was then removed from the tinplate using mercury and immersed in acetone solvent under reflux for 18 hours for extraction. The gel fraction ratio is given by:

$$\frac{\text{Weight of coating after extraction}}{\text{Weight of coating before extraction}} \times 100$$

Coating appearance

The appearance of the coating was checked visually for abnormalities such as shrinkage and reduced gloss.

Adhesion

Each of the compositions of Examples and Comparative Examples was applied to a steel panel treated with zinc phosphate, to a thickness of 30 μm when dried, and subsequently heated under the baking condition listed in Table 1 to prepare a test piece. The coating was cut crosswise to the substrate at a spacing of 1 mm to form 100 squares. A cellophane tape was affixed to the cut coating, pressed against the substrate evenly with a uniform force and then rapidly peeled off. The number of squares remaining on the substrate was counted.

Acid resistance

The same test piece as used for the adhesion test was subjected to a spot test for 3 hours with 60%

sulfuric acid (40 ° C) placed on the surface of the coating. The coating surface was thereafter checked for abnormalities such as blisters and a reduction in gloss.

Preparation examples of silicon compounds of formula (I) wherein $R_1$ is organic group having at least one epoxy group, and examples concerned

Preparation Example 10

Preparation of silicon compound (viii)

A mixture of 1 mole of β-(3,4-epoxycyclohexyl)ethyltrimethoxysilane, 0.9 mole of diethylene glycol and 1000 ppm of aluminum trisacetylacetonato was heated from 80 ° C to 150 ° C over a period of 3 hours for a methanol removing reaction to obtain a silicon compound (viii). The silicon compound (viii) obtained had a molecular weight (peak molecular weight as determined by gel permeation chromatography; the term will be used hereinafter in the same meaning) of 2500, a Gardner viscosity of W, a unit structure represented by the formula

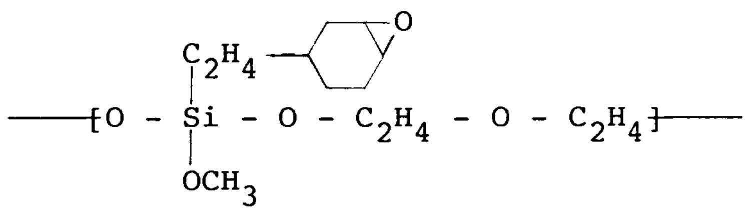

and about 12 methoxysilane groups and about 10 epoxy groups in the molecule on the average.

Preparation Example 11

Preparation of silicon compound (ix)

A mixture of 0.2 mole of β-(3,4-epoxycyclohexyl)ethyltrimethoxysilane, 0.8 mole of phenyltrimethoxysilane, 0.8 mole of diethylene glycol and 1000 ppm of titanium isopropoxide was heated from 80 ° C to 150 ° C over a period of 3 hours for a methanol removing reaction to obtain a silicon compound (ix). The silicon compound (ix) obtained had a molecular weight of 1500, a Gardner viscosity of N, unit structures individually represented by the formula

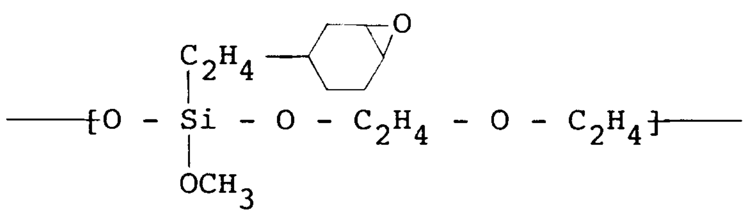

and the formula

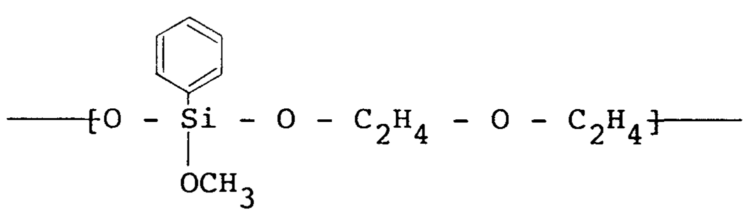

and about 7 methoxysilane groups and about 1 epoxy group in the molecule on the average.

Preparation Example 12

Preparation of silicon compound (x)

A mixture of 0.5 mole of β-(3,4-epoxycyclohexyl)ethyltrimethoxysilane, 0.5 mole of phenethyltrimethoxysilane, 0.95 mole of ethylene glycol and 1000 ppm of aluminum trisacethylacetonato was heated from 80°C to 150°C over a period of 3 hours for a methanol removing reaction to obtain a silicon compound (x). The silicon compound (x) obtained had a molecular weight of 5000, a Gardner viscosity of $Z_3$, unit structures individually represented by the formula

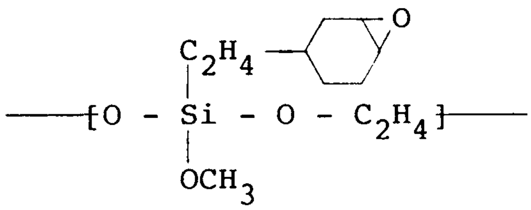

and the formula

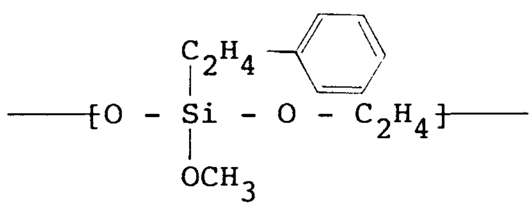

and about 22 methoxysilane groups and about 1 epoxy group in the molecule on the average.

Preparation Example 13

Preparation of silicon compound (xi)

A mixture of 0.8 mole of β-(3,4-epoxycyclohexyl)ethyltrimethoxysilane, 0.2 mole of phenyltrimethoxysilane, 0.9 mole of polyester diol (condensation product, 1/2 in phthalic acid/ethylene glycol mole ratio) and 500 ppm of aluminum trisacetylacetonato was heated from 80°C to 150°C over a period of 3 hours for a methanol removing reaction to obtain a silicon compound (xi). The silicon compound (xi) obtained had a molecular weight of 4000, a Gardner viscosity of Y, unit structures individually represented by the formula

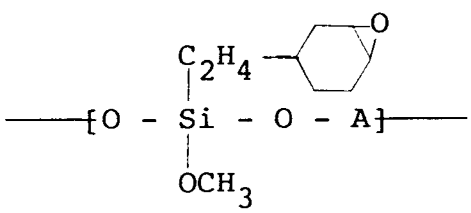

and the formula

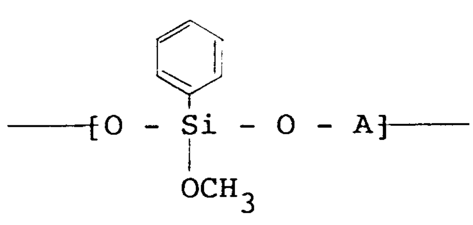

wherein A is a residue of the polyester diol, and about 12 methoxysilane groups and about 8 epoxy groups in the molecule on the average.

Preparation Example 14

Preparation of silicon compound (xii)

A 0.3 mole quantity of β-(3,4-epoxycyclohexyl)ethyltrimethoxysilane, 0.7 mole of phenyltriethoxysilane, 0.8 mole of the same polyester diol as above and 1000 ppm of aluminum trisacethylacetonato were heated from 80 °C to 150 °C over a period of 3 hours for an ethanol removing reaction to obtain a silicon compound (xii). The silicon compound (xii) obtained had a molecular weight of 2000, a Gardner viscosity of T, unit structures individually represented by the formula

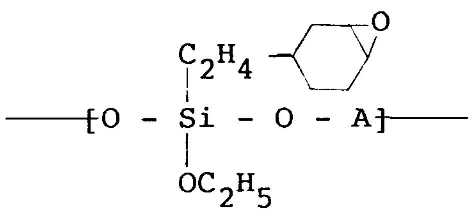

and the formula

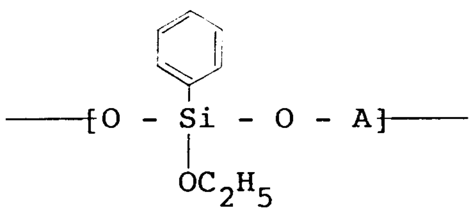

wherein A is a residue of the polyester diol, and about 7 ethoxysilane groups and about 1.5 epoxy groups in the molecule on the average.

Preparation Example 15

Preparation of silicon compound (xiii)

A mixture of 0.5 mole of γ-glycidoxypropyltrimethoxysilane, 0.5 mole of phenyltriethoxysilane, 0.9 mole of diethylene glycol and 500 ppm of aluminum trisacetylacetonato was heated from 80 °C to 150 °C over a period of 3 hours for a methanol removing reaction to obtain a silicon compound (xiii). The silicon compound (xiii) obtained had a molecular weight of 2600, a Gardner viscosity of U, unit structures individually represented by the formula

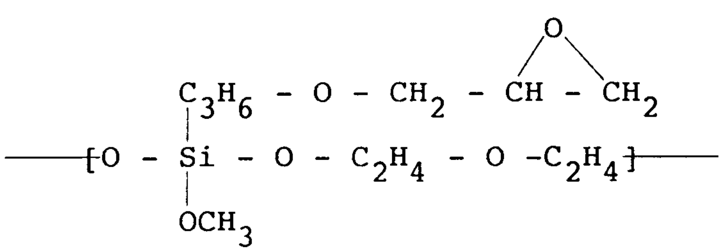

and the formula

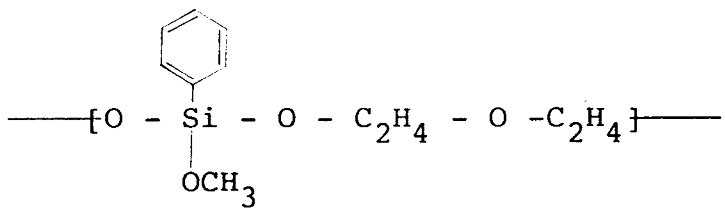

and about 12 methoxysilane groups and about 5 epoxy groups in the molecule on the average.

Preparation Example 16

Preparation of silicon compound (xiv)

A mixture of 0.1 mole of γ-glycidoxypropyltrimethoxysilane, 0.9 mole of phenethyltrimethoxysilane, 0.95 mole of polyester diol (condensation product, 1/2 in phthalic acid/ethylene glycol mole ratio) and 1000 ppm of aluminum trisacetylacetonato was heated from 80°C to 150°C over a period of 3 hours for a methanol removing reaction to obtain a silicon compound (xiv). The silicon compound (xiv) obtained had a molecular weight of 8000, a Gardner viscosity of N, unit structures individually represented by the formula

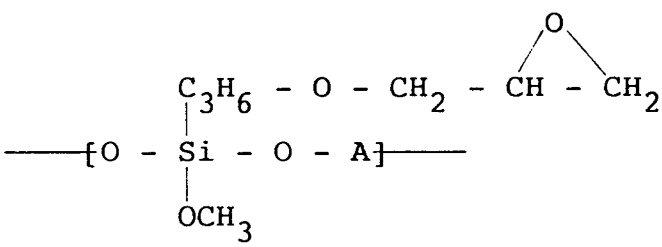

and the formula

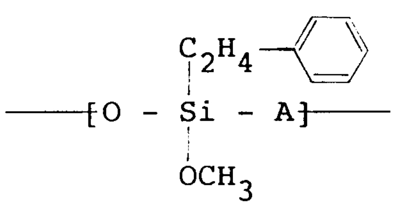

wherein A is a residue of the polyester diol, and about 22 methoxysilane groups and about 2 epoxy groups in the molecule on the average.

Examples 12-23

Compositions of Examples 12 to 23 were prepared using the components given in Table 2 in the proportions listed therein. The compositions were checked for storage stability, gel fraction ratio (curability), adhesion and acid resistance. The results are given in Table 2.

Table 2

| | | | Example | | | | | | |
|---|---|---|---|---|---|---|---|---|---|
| | | | 12 | 13 | 14 | 15 | 16 | 17 | 18 |
| Components (parts) | Silicon Compound | Kind | (viii) | (ix) | (x) | (xi) | (xii) | (xiii) | (xiv) |
| | | Amount | 100 | 100 | 100 | 100 | 100 | 100 | 100 |
| | Hydroxyl-containing resin | Kind | (iii) | (i) | (i) | (i) | (i) | (i) | (i) |
| | | Amount | 100 | 100 | 100 | 100 | 100 | 100 | 100 |
| | Catalyst | Kind | (i) | (i) | (i) | (i) | (i) | (i) | (i) |
| | | Amount | 1 | 1 | 1 | 1 | 1 | 1 | 1 |
| Properties | Storage stability | | A | A | A | A | A | A | A |
| | Baking condition | | 120°C 30min | 140°C 30min | 120°C 30min | 120°C 30min | 140°C 30min | 120°C 30min | 120°C 30min |
| | Gel fraction ratio | | 98.5 | 98.0 | 97.5 | 98.2 | 96.8 | 96.5 | 97.5 |
| | Coating appearance | | Good | Good | Good | Good | Good | Good | Good |
| | Adhesion | | 100 | 100 | 100 | 100 | 100 | 100 | 100 |
| | Acid resistance | | Good | Good | Good | Good | Good | Good | Good |

Table 2 (continued)

| | | | Example 19 | Example 20 | Example 21 | Example 22 | Example 23 |
|---|---|---|---|---|---|---|---|
| Compo-nents (parts) | Silicon Compound | Kind | (ix) | (xiii) | (xi) | (xiii) | (ix) |
| | | Amount | 100 | 100 | 100 | 100 | 100 |
| | Hydroxyl-containing resin | Kind | (ii) | (ii) | (iii) | (iii) | (i) |
| | | Amount | 100 | 100 | 200 | 300 | 300 |
| | Catalyst | Kind | (i) | (i) | (ii) | (i) | (ii) |
| | | Amount | 2 | 2 | 3 | 2 | 4 |
| Prop-erties | Storage stability | | A | A | A | A | A |
| | Baking condition | | 140°C 30min | 100°C 60min | 140°C 30min | 100°C 30min | 120°C 30min |
| | Gel fraction ratio | | 96.8 | 95.0 | 98.2 | 96.5 | 94.0 |
| | Coating appearance | | Good | Good | Good | Good | Good |
| | Adhesion | | 100 | 100 | 100 | 100 | 100 |
| | Acid resistance | | Good | Good | Good | Good | Good |

With reference to Table 2, the solution of hydroxyl-containing resin (iii) is 50% xylene solution of Lumiflon LF-9118 (fluorine-containing resin produced by Asahi Glass Co., Ltd. and having a molecular weight of 15000 and a hydroxyl value of 130), the catalyst (i) is aluminum trisacetylacetonato, and the catalyst (ii) is p-toluenesulfonic acid.

The compositions were tested for storage stability, gel fraction ratio and other properties as listed in Table 2 by the same methods as previously described.

## Claims

**1.** A curable resin composition characterized in that the composition comprises a glycol-modified silicon compound (I) and a resin (II) having at least two hydroxyl groups in the molecule on the average and admixed with the silicon compound (I), the silicon compound (I) being obtained by reacting a glycol with a silicon compound represented by the formula

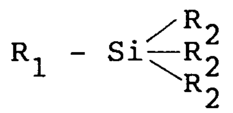

(1)

wherein $R_1$ is a monovalent $C_{1-20}$ hydrocarbon group, -R'-OR" group, -R'-OOC-R" group or organic group having at least one epoxy group, and the groups $R_2$ are the same or different and are each a hydroxyl group or hydrolyzable group, R' being a bivalent $C_{1-8}$ hydrocarbon group, R" being a monovalent $C_{1-10}$ hydrocarbon group, the silicon compound (I) having a structural unit represented by the formula

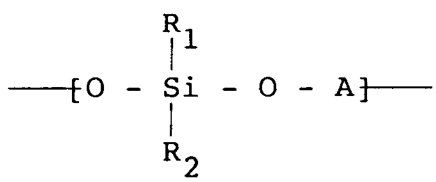

(2)

wherein $R_1$ and $R_2$ are as defined above, and A is a residue of the glycol.

**2.** A composition as defined in claim 1 wherein $R_1$ is an organic group having at least one epoxy group.

**3.** A composition as defined in claim 1 wherein the monovalent $C_{1-20}$ hydrocarbon group is alkyl, cycloalkyl, aryl or aralkyl.

**4.** A composition as defined in claim 1 wherein the organic group having at least one epoxy group is a monovalent organic group comprising a hydrocarbon group or an oxygen-substituted hydrocarbon group, and an aliphatic or alicyclic epoxy group attached to the hydrocarbon group.

**5.** A composition as defined in claim 1 wherein the hydrolyzable group is a group which produces a hydroxysilane group when hydrolized.

**6.** A composition as defined in claim 1 wherein the glycol is a diol, polyether diol, dihydroxy acid, polyester diol or polybutadiene diol.

**7.** A composition as defined in claim 1 wherein a polyol having at least three hydroxyl groups is used conjointely with the glycol.

**8.** A composition as defined in claim 1 wherein the glycol-modified silicon compound (I) contains about 50 to about 100 wt. % of structural units represented by the formula (2).

**9.** A composition as defined in claim 1 wherein the glycol-modified silicon compound (I) is about 500 to about 50000 in molecular weight.

**10.** A composition as defined in claim 1 wherein the hydroxyl-containing resin (II) is about 500 to about 100000 in molecular weight.

**11.** A composition as defined in claim 1 wherein the proportions of the glycol-modified silicon compound (I) and the hydroxyl-containing resin (II) mixed together are 1 to 99 wt. % of the compound (I) and 1 to 99

wt. % of the resin (II) based on the combined amount (calculated as solids) of the two components.

**12.** A curing method characterized by applying the composition defined in claim 1 to a substrate and heating the resulting coating for curing.

# INTERNATIONAL SEARCH REPORT

International Application No PCT/JP92/00103

**I. CLASSIFICATION OF SUBJECT MATTER** (if several classification symbols apply, indicate all) [6]

According to International Patent Classification (IPC) or to both National Classification and IPC

Int. Cl$^5$ C08L83/12, 83/10, 83/06, 101/06, 63/00, 67/02, 71/08, C09D183/12, 183/10, 183/06

**II. FIELDS SEARCHED**

Minimum Documentation Searched [7]

| Classification System | Classification Symbols |
|---|---|
| IPC | C08L83/04-83/16, C08L33/14, C08L67/02, C08L63/00, C08L71/08, C09D183/04-183/16, C08L101/06 |

Documentation Searched other than Minimum Documentation to the Extent that such Documents are Included in the Fields Searched [8]

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| X | JP, A, 59-74149 (Kanegafuchi Chemical Industry Co., Ltd.), April 24, 1984 (24. 04. 84), & EP, B, 108,946 & US, A, 4,593,068 | 1-12 |
| X | JP, A, 60-31556 (Kanegafuchi Chemical Industry Co., Ltd.), February 18, 1985 (18. 02. 85), & EP, B, 108,946 & AU, B, 568,816 | 1-12 |
| X | JP, B1, 46-27585 (Teijin Ltd.), August 10, 1971 (10. 08. 71), (Family: none) | 1-12 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| April 21, 1992 (21. 04. 92) | May 12, 1992 (12. 05. 92) |
| **International Searching Authority** | **Signature of Authorized Officer** |
| Japanese Patent Office | |